# EUROPEAN PATENT APPLICATION

(11) **EP 2 023 517 A1**
(43) Date of publication of application: **11.02.2009**
(21) Application number: 06756682.8
(22) Date of filing: 29.05.2006
(51) Int. Cl.: H04J 11/00, H04B 1/707

(54) **RADIO BASE STATION APPARATUS**

(71) Applicant: Panasonic Corporation, Kadoma-shi Osaka 571-8501 (JP)
(72) Inventor: NAKA, Katsuyoshi c/o Panasonic Corporation IPROC, Osaka 540-6207 (JP); HAGA, Hiroki c/o Panasonic Corporation IPROC, Osaka 540-6207 (JP)
(74) Representative: Grünecker, Kinkeldey, Stockmair & Schwanhäusser Anwaltssozietät
(86) International application number: PCT/JP2006/310637
(87) International publication number: WO 2007/138666

(57) **Abstract**

A radio base station apparatus having an improved cell search performance in a scalable bandwidth system. A base station (100) can assign communication bandwidths of terminals (200) from support bandwidths included in cell bandwidths that are the greatest ones, which are used by the base stations, of support bandwidths supported by the system. The base station (100) comprises a frame forming part (160) that forms a frame in which a frame synchronization sequence (P-SCH) is placed in which when one, to which the local apparatus (base station 100) belongs, of cell bandwidth groups as classified according to cell bandwidths is not a group having the shortest bandwidth (e.g., 1.25 MHz), a pattern, which is orthogonal to the pattern of the frame synchronization sequence (reference pattern of P-SCH) used in the group having the shortest bandwidth is repeated; an IFFT part (170) that serves as a transmitting means for transmitting the frame; a GI inserting part (180); and a radio transmitting part (190).

## Description

### Technical Field

The present invention relates to a radio base station apparatus in a scalable bandwidth system.

### Background Art

Up till now, to perform multicarrier communication represented by the OFDM (Orthogonal Frequency Division Multiplexing) scheme, a radio communication system is proposed where a radio base station apparatus (hereinafter simply "base station") is able to flexibly assign, from its maximum supported bandwidth (hereinafter simply "cell bandwidth") to be used in the cell it covers, the bandwidth in which the radio terminal apparatuses (hereinafter simply "terminals") actually perform communication among a plurality of supported bandwidths radio base station apparatuses support. Such radio communication system is referred to as a scalable bandwidth system (e.g., see Non-Patent Document 1). The scalable bandwidth system assumes 1.25 MHz, 2.5 MHz, 5 MHz, 10 MHz, 15 MHz and 20 MHz as the supported bandwidth in uplink and downlink transmission.

In the scalable bandwidth system, the transmission bandwidth of a cell (i.e., base station) can be flexibly changed, and, consequently, a terminal performs an initial cell search without knowing the cell's transmission bandwidth.

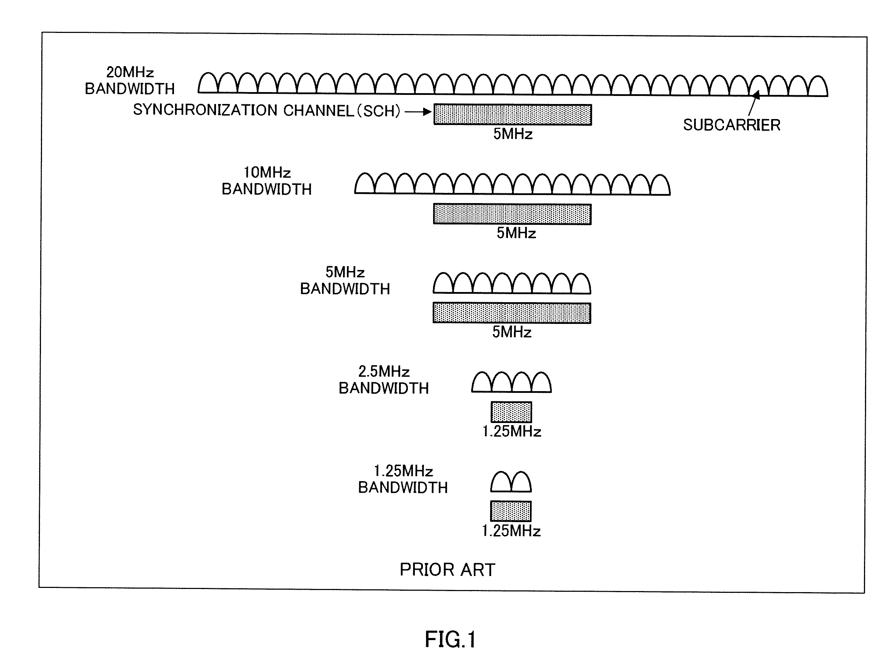

Non-Patent Document 2 discloses an initial cell search method in a scalable bandwidth system. In this initial cell search method, as shown in FIG.1, the synchronization channel ("SCH") used for cell search and the broadcast channel ("BCH") that transmits broadcast information of the cell, are transmitted using the central portion (central band) of the scalable maximum bandwidth (20 MHz). Here, the SCH is comprised of the primary SCH (P-SCH) and the secondary SCH (S-SCH). The P-SCH is the channel for finding the frame timing or subframe timing, and the S-SCH is the channel for finding cell ID (i.e., cell-specific information).

In the related art (e.g., Non-Patent Document 2), these P-SCH and S-SCH are frequency-multiplexed in the same OFDM symbol. FIG.1 illustrates an example of SCH mapping in the frequency domain. In this figure, a cell transmits a 1.25 MHz SCH when the cell bandwidth is less than 5 MHz, and transmits a 5 MHz SCH when the cell bandwidth is equal to or greater than 5 MHz.

By mapping the SCH as above, the following effect is provided. That is, first, the SCH is mapped around the central portion of the maximum scalable bandwidth (20 MHz) regardless of the cell bandwidth, so that a terminal takes a shorter time to perform a carrier search. Second, regardless of the bandwidth in which the terminal can perform transmission or reception, it is possible to realize a substantially equal area coverage and perform a high speed cell search. Finally, a terminal which can perform transmission and reception in a wideband (which is more than 5 MHz) can receive a 5 MHz SCH, so that it is possible to provide frequency diversity effect.
Non-Patent Document 1: 3GPP TR 25.913 v7.0.0 (2005-06) "Requirements for Evolved UTRA and UTRAN"
Non-Patent Document 2: 3GPP, R1-051308, NTT DoCoMo et al, "Text Proposal on Cell Search in Evolved UTRA"

### Disclosure of Invention

### Problem to be Solved by the Invention

However, in the above-noted conventional scalable bandwidth system, as a SCH mapping method of mapping an SCH, a method of repeating mapping an SCH of 1.25 MHz bandwidth is possible. By this means, a terminal that can perform reception only in the minimum supported bandwidth, can receive the SCH and perform a cell search.

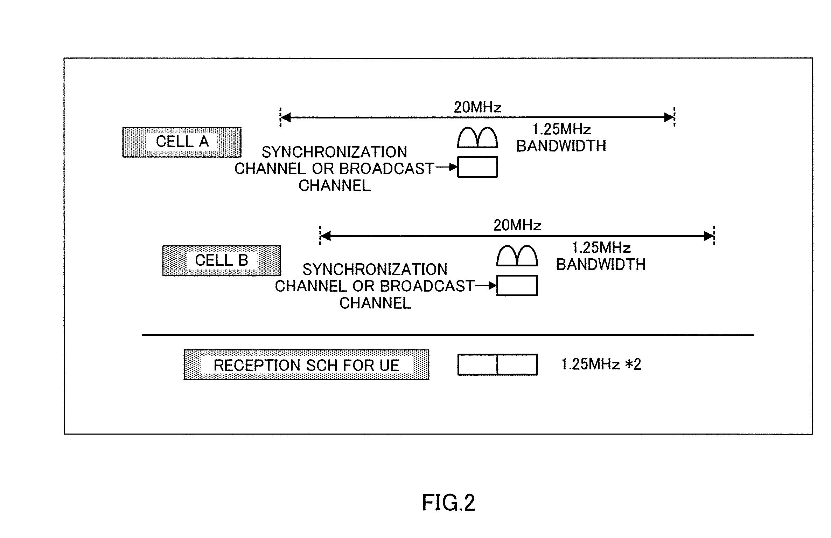

However, such SCH mapping method of repeating mapping an SCH for the minimum supported bandwidth involves the following problems. For ease of explanations, assume a scalable bandwidth system in which an SCH is mapped in a central band of 1.25 MHz, 2.5 MHz or 5 MHz depending on the cell bandwidth. Here, as shown in FIG.2, for example, when a terminal (e.g., which has the reception capacity of 2.5 MHz) that performs a cell search is located in cell B, the terminal may receive an SCH of cell A adjacent to cell B at the same time. In this case, although the terminal is located in cell B of 1.25 MHz central band, the terminal may misidentify that the terminal is located in a cell of 2.5 MHz central band. Further, in a scalable system in which cell bandwidths are divided by 5 MHz into a group of a 1.25 MHz central band and a group of a 5 MHz central band, the above-noted problem may occur when SCH's of the central bands of three adjacent cells are received.

If such cell bandwidth group is misidentified, there is a problem of not decoding cell-specific information such as the S-SCH and BCH, and deteriorating the cell search performance.

It is therefore an object of the present invention to provide a radio base station apparatus to improve cell search performance in a scalable bandwidth system.

### Means for Solving the Problem

The radio base station apparatus of the present invention that can flexibly assign communication bandwidths to radio terminal apparatuses from a plurality of bandwidths supported in a scalable bandwidth system including a plurality of radio base station apparatuses, the communication bandwidths being within a maximum supported bandwidth the radio base station apparatus uses, employs a configuration having: a frame forming section that forms a frame in which a frame synchronization sequence is mapped that is generated comprising a mapped frame synchronization sequence generated by repeating an orthogonal pattern to of a pattern of a frame synchronization sequence used in a group of a minimum bandwidth in base station bandwidth groups classified according to the base station bandwidth; and a transmitting section that transmits the frame.

### Advantageous Effect of the Invention

According to the present invention, it is possible to provide a radio base station apparatus to improve cell search performance in a scalable bandwidth system.

### Brief Description of Drawings

FIG.1 illustrates an initial cell search method in a conventional scalable bandwidth system;
FIG.2 illustrates a problem to be solved by the present invention;
FIG.3 is a block diagram showing a configuration of a radio base station apparatus according to an embodiment of the present invention;
FIG.4 is a block diagram showing a configuration of a radio terminal apparatus according to an embodiment of the present invention;
FIG.5 illustrates a frame which the radio base station apparatus of FIG.3 transmits; and
FIG.6 illustrates an SCH pattern the radio base station apparatus of FIG.3 transmits and SCH reception in the radio terminal apparatus of FIG.3.

### Best Mode for Carrying out the Invention

An embodiment of the present invention will be explained below in detail with reference to the accompanying drawings.

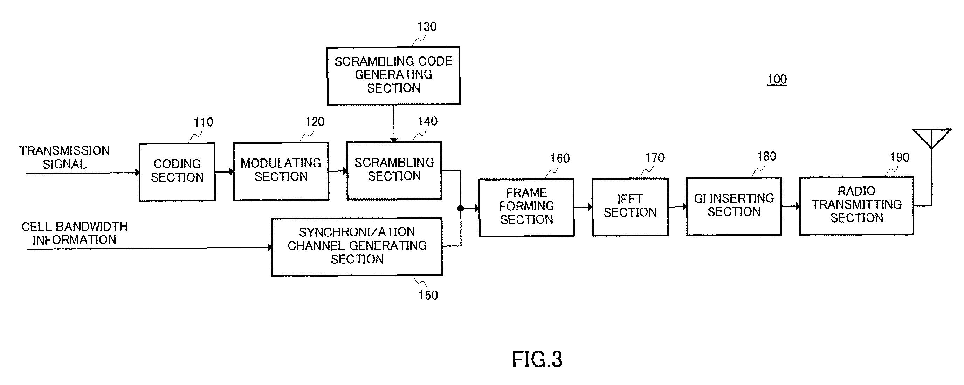

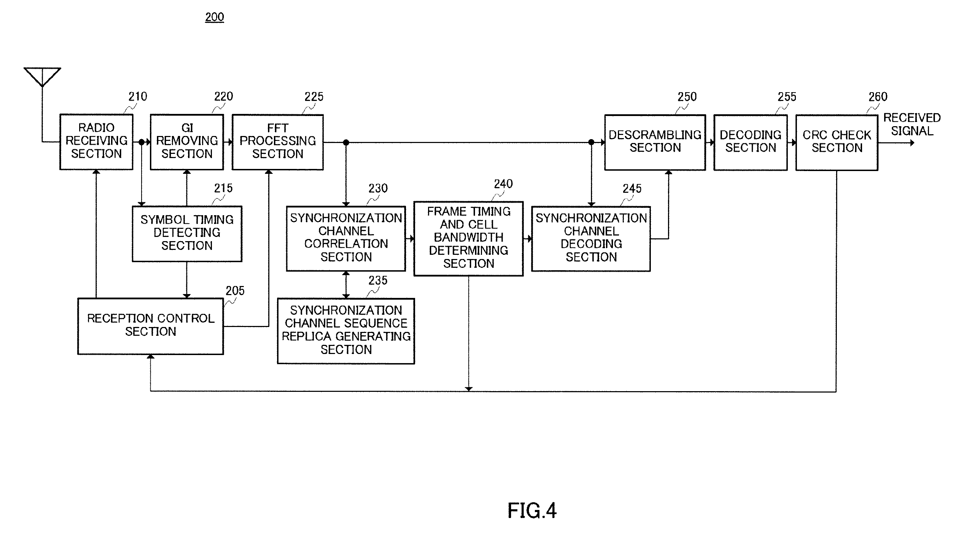

FIG.3 shows the configuration of radio base station apparatus (hereinafter "base station") 100 in the scalable bandwidth system of the present embodiment, and FIG.4 shows a radio terminal apparatus (hereinafter "terminal") 200 that communicates with base station 100.

First, base station 100 shown in FIG.3 will be explained. As shown in the figure, base station 100 is configured with coding section 110, modulating section 120, scrambling code generating section 130, scramble section 140, synchronization channel generating section 150, frame forming section 160, IFFT section 170, GI inserting section 180 and radio transmitting section 190.

Coding section 110 performs predetermined coding for an inputted transmission signal and transmits the acquired encoded signal to modulating section 120. Modulating section 120 performs predetermined primary modulation (generally, a primary modulation according to QoS or radio channel condition) for the encoded signal, and transmits the acquired modulation signal to scramble section 140.

Scrambling code generating section 130 generates a scrambling code according to the scrambling code number specific to base station 100, and outputs the generated scrambling code to scramble section 140.

Scramble section 140 scrambles the modulation signal by multiplying the modulation signal and the scrambling code on a per OFDM symbol basis, and transmits the scrambled signal to frame forming section 160.

Synchronization channel generating section 150 receives as input, the cell bandwidth information of the cell base station 100 covers, and generates a P-SCH of a pattern according to the cell bandwidth information. The cell bandwidth information inputted to synchronization channel generating section 150 is the information indicating the "cell bandwidth" that is the maximum supported bandwidth used in the cell of base station 100 among the bandwidths the scalable bandwidth system supports. Base stations 100 are classified into groups (also referred to as "cell bandwidth groups") according to the cell bandwidths of base stations 100, and associated with P-SCH of respective patterns per cell bandwidth group.

To be more specific, synchronization channel generating section 150 makes the pattern of P-SCH used in the cell bandwidth group to which the minimum cell bandwidth (i.e., minimum supported bandwidth) belongs, the base pattern, and generates the P-SCH for cell bandwidth group of the next, wider bandwidth by repeating (i.e., performing repetition) an orthogonal pattern of the base pattern. Further, synchronization channel generating section 150 generates the P-SCH for the second next, wider cell bandwidth group from the cell bandwidth group to which the minimum cell bandwidth belongs, by repeating an orthogonal pattern of the P-SCH generated by repeating the orthogonal pattern of the base pattern. To generate such P-SCH, the orthogonal Hadamard sequence is used in which the pattern of the P-SCH used in the cell bandwidth group to which the minimum cell bandwidth belongs, is used as the base pattern.

Further, synchronization channel generating section 150 generates an S-SCH for finding cell ID (i.e., cell-specific information). This S-SCH has a length according to the cell bandwidth group.

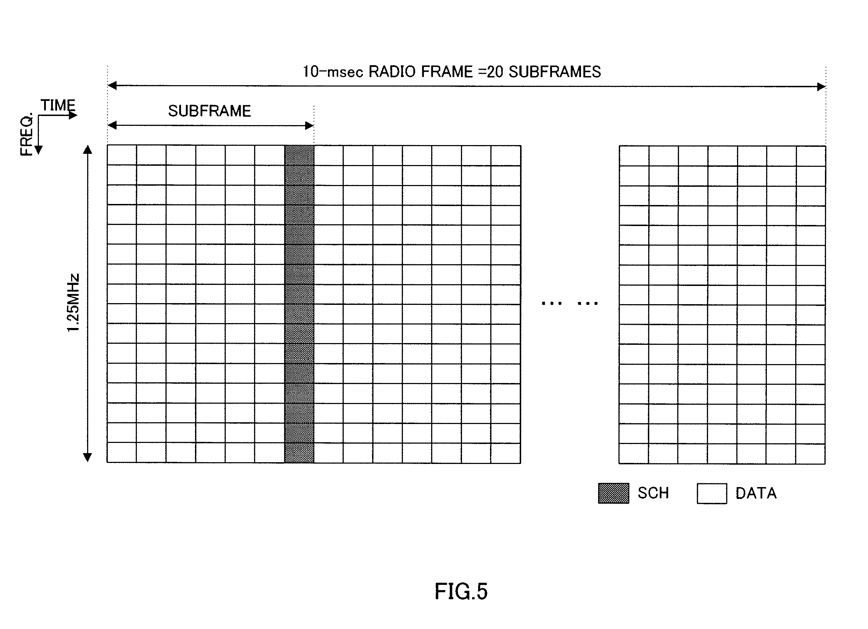

Using the P-SCH from synchronization channel generating section 150, frame forming section 160 forms a frame in which a unique P-SCH according to the cell bandwidth group is mapped in a predetermined symbol in the central band that has a bandwidth according to the cell bandwidth group (also referred to as "central supported band") and that is included in the maximum supported bandwidth the scalable bandwidth system supports. Further, frame forming section 160 maps the S-SCH in symbol positions of a certain positional relationship with the symbol in which the P-SCH is mapped. This S-SCH is mapped in a band of the bandwidth according to the cell bandwidth group. As shown in FIG.5, frame forming section 160 maps the SCH at least in one OFDM symbol in a frame, and maps the scrambled signal from scramble section 140 in the other symbols than the symbol in which the SCH is mapped. That is, the SCH and the scrambled signal are time-multiplexed.

The output of frame forming section 160 is transformed in IFFT (Inverse Fast Fourier Transform) section 170, from a frequency domain signal into a time domain signal, which is a multicarrier signal, inserted a guard interval ("GI") in GI insertion section 180, subjected to predetermined radio processing such as digital/analogue conversion processing and up-conversion processing on a radio frequency in radio transmitting section 190, and outputted from an antenna.

Next, the configuration of terminal 200 shown in FIG.4 will be explained. As shown in the figure, terminal 200 is configured with reception control section 205, radio receiving section 210, symbol timing detecting section 215, GI removing section 220, FFT processing section 225, synchronization channel correlation section 230, synchronization channel sequence replica generating section 235, frame timing and cell bandwidth determining section 240, synchronization channel decoding section 245, descrambling section 250, decoding section 255 and CRC check section 260.

Reception control section 205 controls the output destination of radio receiving section 210 and FFT processing section 225 according to the condition of terminal 200 (such as the first, second and third step in the initial cell search mode or normal reception mode).

When terminal 200 is in the first step in the initial cell search mode, reception control section 205 generates and transmits an output destination command signal that designates symbol timing detecting section 215 as the output destination, to radio receiving section 210. When terminal 200 is in other steps than the first step in the initial cell search mode, reception control section 205 generates and transmits an output destination command signal that designates GI removing section 220 as the output destination, to radio receiving section 210. Further, when the first step in the initial cell search mode has been finished, if frame timing and cell bandwidth determining section 240 detects the cell bandwidth, reception control section 205 transmits the cell bandwidth information to radio receiving section 210.

When terminal 200 is in the second step in the initial cell search mode, reception control section 205 generates and transmits an output destination command signal that designates synchronization channel correlation section 230 as the output destination, to FFT processing section 225. When terminal 200 is in the third step in the initial cell search mode, reception control section 205 generates and transmits an output destination command signal that designates synchronization channel decoding section 245 as the output destination, to FFT processing section 225. When terminal 200 is in the normal reception mode, reception control section 205 generates and transmits an output destination command signal that designates descrambling section 250 as the output destination, to FFT processing section 225.

Radio receiving section 210 performs radio receiving processing (such as down-conversion and A/D conversion) on a received signal. When terminal 200 is in the first step in the initial cell search mode, radio receiving section 210 performs radio receiving processing on the received signal in the band which has the minimum supported bandwidth (e.g., 1.25 MHz) and which is the central band in the maximum bandwidth supported in the scalable bandwidth system, and outputs the result to symbol timing detecting section 215.

When the first step in the initial cell search mode has been finished, radio receiving section 210 outputs the signal after radio receiving processing, to GI removing section 220. After receiving cell bandwidth group information specified in frame timing and cell bandwidth determining section 240 from reception control section 205, radio receiving section 210 performs receiving processing in the bandwidth indicated by the cell bandwidth group information.

Symbol timing detecting section 215 receives as input the signal after radio receiving processing, and detects the symbol timing by the GI correlation method (autocorrelation method) or the mutual correlation method using time replica waveforms. The detected symbol timing is outputted to GI removing section 220 and reception control section 205.

GI removing section 220 receives as input the signal after radio receiving processing, removes the GI according to the symbol timing (FFT window timing) detected in symbol timing detecting section 215, and outputs the acquired signal without a GI, to FFT processing section 225.

FFT processing section 225 receives as input the received signal without a GI, and performs FFT processing on the signal on a per OFDM symbol basis. FFT processing section 225 outputs the received signal after FFT processing to synchronization channel correlation section 230 when terminal 200 is in the second step in the initial cell search mode, outputs the received signal to synchronization channel decoding section 245 when terminal 200 is in the third step in the initial cell search mode, and outputs the received signal to descrambling section 250 when terminal 200 is in the normal reception mode.

Synchronization channel correlation section 230 performs correlation calculations for all OFDM symbols in a frame in the received signal after FFT processing, using all the P-SCH pattern candidates associated with the cell bandwidth group. Further, synchronization channel correlation section 230 performs a correlation calculation for a received signal per "subcarrier block" acquired by dividing the central supported band of the group of the maximum central supported band in the "cell bandwidth groups" into bands having a supported bandwidth equal to or less than the central supported bandwidth of the central supported band of the group of the maximum supported band, using all the P-SCH patterns associated with the bandwidths of the subcarrier blocks.

Synchronization channel sequence replica generating section 235 generates all the P-SCH pattern candidates associated with the cell bandwidth group, and outputs the generated candidates to synchronization channel correlation section 230.

Frame timing and cell bandwidth determining section 240 receives as input the results of the correlation calculations with the P-SCH candidates associated with the bandwidths of subcarrier blocks on a per subcarrier block basis, from synchronization channel correlation section 230. Frame timing and cell bandwidth determining section 240 detects the frame timing from the symbol associated with the maximum value in the inputted correlation power values. Further, frame timing and cell bandwidth determining section 240 specifies the P-SCH associated with the maximum correlation value, and specifies the cell bandwidth group associated with the P-SCH. The detected frame timing and cell bandwidth group is transmitted to reception control section 205 and synchronization channel decoding section 245.

When terminal 200 is in the third step in the initial cell search, synchronization channel decoding section 245 receives as input the received signal after FFT processing from FFT processing section 225, and decodes the S-SCH. Synchronization channel decoding section 245 knows the symbol positions where the S-SCH is mapped, from the frame timing or cell bandwidth group detected in frame timing and cell bandwidth determining section 240, and therefore can decode the S-SCH. As described above, the S-SCH represents the information relating to the cell, such as scrambling code information.

Descrambling section 250 receives as input the received signal after FFT processing from FFT processing section 225 when terminal 200 is in the normal reception mode. Descrambling section 250 descrambles the received signal after FFT processing to remove the scrambling code associated with the S-SCH decoded in synchronization channel decoding section 245.

Decoding section 255 performs appropriate error correcting decoding for the descrambled received signal, and outputs the result to CRC check section 260.

CRC check section 260 performs a CRC error check for the inputted signal, and, when there is no error, determines that the initial cell search has been finished, and, when there is error, outputs the CRC error check result for a retry from the first step, to reception control section 205.

Next, the operation of a scalable bandwidth system having above-noted base station 100 and terminal 200 will be explained.

In the scalable bandwidth system, as described above, base stations 100 supporting 1.25 MHz, 2.5 MHz, 5 MHz, 10 MHz, 15 MHz and 20 MHz exist individually. Further, terminals 200 that can perform reception in bands of 1.25 MHz, 2.5 MHz, 5 MHz, 10 MHz, 15 MHz and 20 MHz exist individually. Further, base stations 100 are classified into cell bandwidth groups according to the cell bandwidths. Here, a case will be explained where there are three cell bandwidth groups of 1.25 MHz, 2.5 MHz, and 5 MHz or greater cell bandwidth.

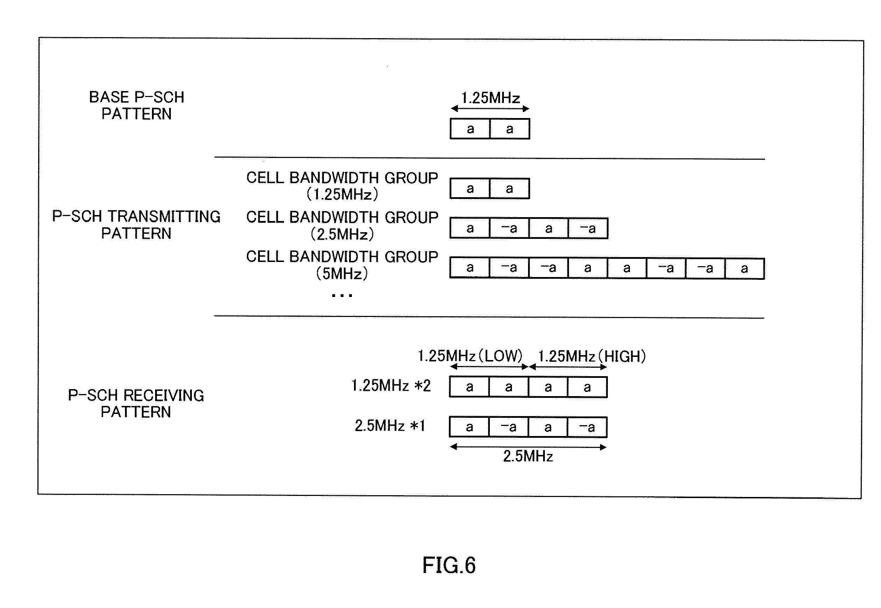

In base station 100, synchronization channel generating section 150 generates a P-SCH of the pattern associated with cell bandwidth information. To be more specific, as shown in FIG.6, the pattern of the P-SCH used in the cell bandwidth group to which the minimum cell bandwidth (1.25 MHz) belongs, is used as the base pattern, and the P-SCH of the next wider cell bandwidth group (in this case, the cell bandwidth group of 2.5 MHz central supported bandwidth) is generated by repeating (performing repetition) an orthogonal pattern of the base pattern. Further, the P-SCH of the next wideer cell bandwidth group (in this case, the cell bandwidth group of the central supported bandwidth of 5 MHz) from the cell bandwidth group of 2.5 MHz central supported bandwidth, is generated by repeating an orthogonal pattern of the P-SCH generated by repeating the orthogonal pattern of the base pattern (i.e., the P-SCH of the cell bandwidth group of 2.5 MHz central supported bandwidth). To generate such P-SCH, the orthogonal Hadamard sequence is used in which the pattern of the P-SCH used in the cell bandwidth group to which the minimum cell bandwidth belongs, is used as the base pattern. Here, the generation of the P-SCH by repeating an orthogonal pattern of the base pattern applies to all the cell bandwidth groups except for the minimum cell bandwidth group.

Frame forming section 160 forms a frame in which a unique P-SCH (i.e., a P-SCH of a unique pattern and length) is mapped in the central supported band according to the cell bandwidth group.

To be more specific, when the cell bandwidth group to which the cell bandwidth of base station 100 belongs, is not the cell bandwidth group of the central supported band of the minimum bandwidth, frame forming section 160 forms a frame in which a P-SCH acquired by repeating an orthogonal pattern of the pattern of the P-SCH (corresponding to the base pattern) used in the cell bandwidth group of the central supported band of the minimum bandwidth, is mapped. By forming such frame, if correlation is found using the P-SCH of the base pattern, although the correlation peak is found when the receiving side (terminal 200) for this frame receives the P-SCH of the cell bandwidth group of the minimum bandwidth, the correlation peak is not found when terminal 200 receives the P-SCH of a different group from the cell bandwidth group of the minimum bandwidth. Therefore, terminal 200 can determine whether or not a cell bandwidth group to which the cell of the cell search target in base station 100 belongs, is the cell bandwidth group of the minimum bandwidth. That is, even when the P-SCH of the cell in which the terminal is located and the P-SCH of an adjacent cell are located side by side in the frequency domain, it is possible to prevent terminal 200 from misidentifying the cell bandwidth group to which the cell of terminal 200 belongs. Further, all P-SCH's are generated based on a single base pattern, and, consequently, by finding correlation of received signals using the base pattern to find the peak of correlation power, the receiving side (terminal 200) can find a frame synchronization regardless of the bandwidth terminal 200 can receive (i.e., receiving capacity).

Further, frame forming section 160 forms a frame in which a P-SCH acquired by repeating an orthogonal pattern of the P-SCH pattern used in the cell bandwidth group of the central supported band having the next wider bandwidth from the cell bandwidth group to which the cell bandwidth of base station 100 belongs, is mapped. By forming such a frame, in two cell bandwidth groups that are adjacent to each other in terms of the bandwidth of the respective central supported bands, if correlation is found using the P-SCH used in the cell bandwidth group of the central supported band of the narrower bandwidth, although the correlation peak is found when terminal 200 receives the P-SCH of the cell bandwidth group of the narrower central supported bandwidth, correlation is not found when terminal 200 receives the P-SCH of the cell bandwidth group of the greater central supported bandwidth. Therefore, terminal 200 can determine to which cell bandwidth group the cell of the cell search target in base station 100 belongs.

The frame formed in frame forming section 160 is outputted via IFFT section 170, GI inserting section 180 and radio transmitting section 190.

Terminal 200 performs a cell search using signals transmitted from base station 100. In this case, in terminal 200, synchronization channel correlation section 230 performs a correlation calculation for the received signal per subcarrier block acquired by dividing the central supported band of the group of the maximum supported band in cell bandwidth groups, into bands of a supported bandwidth equal to or less than the central supported bandwidth, using all the P-SCH patterns associated with the bandwidth of the subcarrier blocks.

For example, for ease of explanations, if the central supported band of the group of the maximum central supported band is 2.5 MHz, as shown in FIG.6, synchronization channel correlation section 230 performs correlation calculations for received signals per subcarrier block acquired by dividing the central supported band (2.5 MHz) of a group of the maximum supported band in cell bandwidth groups, into bands of a supported bandwidth equal to or less than the central supported bandwidth (i.e., into bands of 2.5 MHz and 1.25 MHz), using all P-SCH patterns associated with the bandwidth of the subcarrier block. That is, synchronization channel correlation section 230 performs correlation calculations for the signals of the 2.5 MHz subcarrier block and 1.25 MHz subcarrier blocks (including the subcarrier block of the higher frequency ("high") and the subcarrier block of the less frequency ("low") individually, using P-SCH patterns associated with the bandwidths of the subcarrier blocks, that is, using the P-SCH in the cell bandwidth group of 2.5 MHz central supported band for 5 MHz subcarrier block and the P-SCH (base pattern) in the cell bandwidth group of 1.25 MHz central supported band for 1.25 MHz subcarrier block.

Further, frame timing and cell bandwidth determining section 240 detects the frame timing from the symbol associated with the maximum value in correlation power values inputted from synchronization channel correlation section 230. Further, frame timing and cell bandwidth determining section 240 specifies the P-SCH associated with the maximum correlation value and specifies the cell bandwidth group associated with the P-SCH. Further, synchronization channel decoding section 245 decodes the S-SCH mapped in a band of the bandwidth according to this cell bandwidth group. By this means, it is possible to detect the cell bandwidth of base station 100 upon detecting the frame timing when terminal 200 is in the second step in the initial cell search mode. According to the result, terminal 200 can receive the S-SCH according to the cell bandwidth, so that it is possible to decode the S-SCH correctly.

As described above, according to the present embodiment, base station 100 is able to flexibly assign bandwidths to terminals 200 from the cell bandwidth, which is the maximum bandwidth base station 100 uses among a plurality of bandwidths supported in the scalable bandwidth system, and employs a configuration having: frame forming section 160 that forms a frame in which, when the group to which base station 100 belongs is not the minimum bandwidth (e.g., 1.25 MHz) group in cell bandwidth groups classified according to the cell bandwidth, a frame synchronization sequence (P-SCH) generated by repeating an orthogonal pattern of the pattern of the frame synchronization sequence (i.e., the base pattern of the P-SCH) used in the minimum cell bandwidth group is mapped; and transmitting sections that transmit frames such as IFFT section 170, GI inserting section 180 and radio transmitting section 190.

With this configuration, if correlation is found using the P-SCH of the base pattern, although the correlation peak is found when the receiving side (terminal 200) for this frame receives the P-SCH of the cell bandwidth group of the minimum bandwidth, the correlation peak is not found when terminal 200 receives the P-SCH of a different group from the cell bandwidth group of the minimum bandwidth. Therefore, terminal 200 can determine whether or not a cell bandwidth group to which the cell of the cell search target in base station 100 belongs, is the cell bandwidth group of the minimum bandwidth. That is, even when the P-SCH of the cell in which the terminal is located and the P-SCH of an adjacent cell are located side by side in the frequency domain, it is possible to prevent terminal 200 from misidentifying the cell bandwidth group to which the cell of terminal 200 belongs. As a result, cell-specific information such as the S-SCH and BCH can be decoded accurately, so that it is possible to improve cell search performance.

Further, all P-SCH's are generated based on a single base pattern, and, consequently, by finding correlation of received signals using the single base pattern to find the peak of correlation power, the receiving side (terminal 200) can find a frame synchronization regardless of the bandwidth terminal 200 can receive (i.e., receiving capacity).

Further, in base station 100, frame forming section 160 forms a frame in which a frame synchronization sequence is mapped in a predetermined band (e.g., central supported band) that has a supported bandwidth associated with the cell bandwidth group and that is included in a band having the cell bandwidth.

Further, in base station 100, frame forming section 160 forms a frame including a mapped frame synchronization sequence (P-SCH) generated by repeating an orthogonal pattern of the pattern of the frame synchronization sequence (P-SCH) used in the cell bandwidth group of the next wider cell bandwidth from the cell bandwidth group to which the cell bandwidth of base station 100 belongs.

By this means, in two cell bandwidth groups that are adjacent to each other in terms of the bandwidth of the respective central supported bands, if correlation is found using the P-SCH used in the cell bandwidth group of the central supported band of the narrower bandwidth, although the correlation peak is found when terminal 200 receives the P-SCH of the cell bandwidth group of the narrower central supported bandwidth, correlation is not found when terminal 200 receives the P-SCH of the cell bandwidth group of the greater central supported bandwidth. Therefore, terminal 200 can decide to which cell bandwidth group the cell of the cell search target belongs. That is, even when the P-SCH of the cell in which the terminal is located and the P-SCH of an adjacent cell are located side by side in the frequency domain, it is possible to prevent terminal 200 from misidentifying the cell bandwidth group to which the cell of terminal 200 belongs. As a result, cell-specific information such as the S-SCH and BCH can be decoded accurately, so that it is possible to improve cell search performance.

### Industrial Applicability

The radio base station apparatus of the present invention is useful as a radio base station apparatus to improve cell search performance in the scalable bandwidth system.

## Claims

1. A radio base station apparatus that can flexibly assign communication bandwidths to radio terminal apparatuses from a plurality of bandwidths supported in a scalable bandwidth system comprising a plurality of radio base station apparatuses, the communication bandwidths being within a maximum supported bandwidth the radio base station apparatus uses, the radio base station apparatus comprising:
a frame forming section that forms a frame in which a frame synchronization sequence is mapped that is generated by repeating an orthogonal pattern of a pattern of a frame synchronization sequence used in a group of a minimum bandwidth in base station bandwidth groups classified according to the base station bandwidth; and
a transmitting section that transmits the frame.

2. The radio base station apparatus according to claim 1, wherein the frame forming section forms a frame in which a frame synchronization sequence is mapped that is generated by repeating an orthogonal pattern of a frame synchronization sequence used in a group of a next wider base station bandwidth from the group to which the base station apparatus belongs.

3. The radio base station apparatus according to claim 2, wherein the frame synchronization sequence comprises an orthogonal Hadamard sequence.

4. The radio base station apparatus according to claim 1, wherein the frame forming section forms a frame in which the frame synchronization sequence is mapped in a predetermined band that has the supported bandwidth associated with the cell bandwidth group and that is included in a band of the base station bandwidth.
